# EUROPÄISCHE PATENTSCHRIFT

(11) **EP 3 289 277 B1**
(45) Veröffentlichungstag und Bekanntmachung des Hinweises auf die Patenterteilung: **06.11.2019**
(21) Anmeldenummer: 16732930.9
(22) Anmeldetag: 26.04.2016
(51) Int. Cl.: F17C 1/02, B29C 45/00

(54) **POLKAPPE INSBESONDERE FÜR EINEN DRUCKBEHÄLTER SOWIE VERFAHREN ZUR HERSTELLUNG DER POLKAPPE UND DRUCKBEHÄLTER**
END CAP IN PARTICULAR FOR A PRESSURE VESSEL, METHOD FOR MANUFACTURING SAID END CAP, AND PRESSURE VESSEL
CAPUCHON POLAIRE NOTAMMENT POUR RÉCIPIENT SOUS PRESSION ET PROCÉDÉ DE FABRICATION DE CAPUCHON POLAIRE ET DU RÉCIPIENT SOUS PRESSION

(30) Priorität: 27.04.2015 DE 102015106461
(43) Veröffentlichungstag der Anmeldung: 07.03.2018
(73) Patentinhaber: Frauenthal Automotive Elterlein GmbH, 09481 Elterlein (DE)
(72) Erfinder: PFEFFER, Harald, 08451 Crimmitschau (DE); MELZER, Robert, 09481 Scheibenberg OT Oberscheibe (DE); NAUMANN, Mario, 01723 Wilsdruff (DE); KROLL, Lothar, 01324 Dresden (DE); NENDEL, Wolfgang, 09569 Oederan (DE); SCHUBERT, Detlef, 09212 Limbach-Oberfrohna (DE)
(74) Vertreter: Rumrich, Gabriele
(86) Internationale Anmeldenummer: PCT/DE2016/100193
(87) Internationale Veröffentlichungsnummer: WO 2016/173587

(56) Entgegenhaltungen:
- WO-A1-2014/139531
- AT-U1- 11 875
- DE-A1-102011 105 627
- DE-T2- 69 114 878
- DE-U- 1 939 919
- DE-U1-202004 004 753
- DE-U1-202004 005 680
- GB-A- 979 033
- US-A- 3 017 053
- US-A- 3 508 677

## Beschreibung

Die Erfindung betrifft eine Polkappe, insbesondere für einen Druckbehälter sowie ein Verfahren zur Herstellung der Polkappe und einen Druckbehälter.

Solche Polkappen werden insbesondere Druckbehälter in Druckluft-Bremsanlagen von Kraftfahrzeugen eingesetzt.

Es ist bekannt derartige Polkappen aus Kunststoff separat zu fertigen und beidseitig an einem rohrförmigen Mittelteil des Behälters zu befestigen.

Ein Druckluftbehälter aus faserverstärktem Kunststoff, insbesondere für Druckluft-Bremsanlagen, weist gemäß DE 39 22 577 A1 einen zylindrischen Mittelabschnitt und zwei durch Klebung längs eines Überlappungsbereichs damit verbundenen Deckel auf. Der Mittelabschnitt ist ein Wickelteil, und die Deckel sind Pressteile. Mittelabschnitt und Deckel weisen im Überlappungsbereich aneinander angepasste Klebeflächen an mindestens einer Umfangsnut des einen Teils und mindestens einer in diese greifende Umfangsrippe des anderen Teils auf. Insbesondere haben die Klebeflächen im Längsschnitt Wellenform. Diese sollen bei einer dreiteiligen Ausführung mit eingeklebtem Deckel die Kräfteverteilung in der Klebefläche verbessern, sind aber fertigungstechnisch ungünstig.

In der Druckschrift DE 100 17 021 B4 wird ein Verfahren zur Herstellung eines Behälters zur Aufnahme eines unter Druck stehenden Mediums beschrieben.

Des Weiteren wird die Gestaltung des Druckbehälters und der Anschlussstelle beschrieben. Die Herstellung umfasst hierbei 4 Schritte.

Im ersten Schritt wird ein Mantel aus Blech rollgeformt sowie die Stoßkanten verschweißt. Im folgenden Schritt wird eine umlaufende Kleberaupe an der Innenwand des Mantels angebracht.

Schritt 3 beinhaltet das Einführen von Stülpböden woraufhin in Schritt 4 eine formschlüssige Verbindung von Mantel und Böden mit radial angeordneten Durchsetzfügeverbindungen im Überlappungsbereich erzeugt werden.

Die Anschlussstellen bestehen aus Gewinderingen und werden am Ihrem Flansch mit dem Behälter verklebt. Die Böden sind als Stülpböden ausgebildet und weisen einen nach außen gebogenen Kragen auf, der mit seinem Außenumfang in dem zylindrischen Mittelabschnitt des Behälters eingreift, so dass ein Überlappungsbereich gebildet wird. Die Böden und der Mantel können aus unterschiedlichen Materialien hergestellt sein. Nachteilig wirkt sich hier die Gestaltung der Bodenränder als Stülp-Geometrie aus, da sich durch die Innendruckbelastung eine ungünstige Kraftkomponente in vertikaler Richtung zur Behälterwand einstellt, die u.U. zur Deformation der gestülpten Krempe oder dem Ausknöpfen der Durchsetzfügeverbindungen und damit zum Versagen des Behälters führen kann.

Auch aus der Druckschrift DE 199 37 470 A1 ist ein dreiteiliger Druckbehälter bekannt, der sich überlappende Wandbereiche zwischen dem zylindrischen Mittelabschnitt und den Böden aufweist. Es sind bodenseitigen Anschlüsse und ein Anschuss in zylinderförmigen Mittelbereich vorgesehen. Die hier eingesetzten Böden sollen durch Spritzguss oder im Pressverfahren hergestellt werden und auf der Außen- und Innenseite Verstärkungsrippen haben, die quer über die Deckelfläche verlaufen. Die hier gewählte Gestaltung der Polkappen führt jedoch zu erhöhten Spannungen im Bereich der Innenfaser der Krempe, welche durch große Wandstärken und umfangreiche Verrippung aufgefangen werden müssen.

Aus der DE 10 2011 105 627 A1 ist ebenfalls ein dreiteiliger Verbund-Druckbehälter bekannt.

Das Zusammenbauverfahren für den Verbund-Druckbehälter umfasst, dass ein Endabschnitt eines rohrförmigen Elements in einen kreisringförmigen Schlitz gepasst wird, der in einer Endkappe gebildet ist. In dem kreisringförmigen Schlitz kann sich ein Dichtungsmittel befinden. Die Endkappe umfasst eine Ringnut in einer Außenfläche des Endkappenkörperabschnittes. Es wird eine erste Materiallage auf einer Außenfläche des rohrförmigen Elements gebildet. In einer weiteren Variante wird der Endabschnitt des Rohrförmigen Elementes mittels umfangsseitiger Nuten und Kreisringförmiger Vertiefungen an dem Mittelteil des Behälters befestigt.

Nachteilig wirkt sich bei dieser formschlüssigen Übertragung der Axialkräfte die durch die Verlegung entstehenden Falten an den Laschen aus, die in der zweiten Materiallage aufgebracht werden, in die ringförmige Vertiefung in der Polkappe eingreifen und dort durch einen nachträglich aufgebrachten Spannring gehalten werden. Die durch das Einformen dieser Laschen in die ringförmige Vertiefung entstehenden Falten und Verwerfungen beeinträchtigen zum einen die Kraftübertragung in dieser Materiallage und ergeben zum anderen eine Störung in der Oberfläche. Diese Oberflächenstörungen sind sowohl optisch, als auch hinsichtlich Schmutzansammlung nachteilig. Zudem ist die Herstellung der Wicklung durch das Positionieren der Laschen und anschließende Anbringen des Spannringes aufwändig und kostenintensiv.

Ein weiterer Behälter zur Aufnahme eines unter Druck stehenden Mediums wird in der Druckschrift DE 198 32 145 B4 beschrieben.

Hier werden die Böden als separates Teil hergestellt und bestehen aus einem Faser-Kunststoff-Verbund-Material mit Kurz-, Lang- oder Endlosfasern, wobei der Boden nach innen in den Behälterraum gewölbt ausgebildet ist und an dem gewölbten Boden ein umlaufender Kragen angeordnet ist, der an der Innenwandung des Mittelteils anliegt und mit dieser verbunden ist. Die Anordnung des Bodens soll gewährleisten, dass anstelle der gefährlichen Zugspannungen, die insbesondere bei der Außenwölbung auftreten, nun aufgrund der Umkehrung des Bodens im Flächenbereich Quer- Druckspannungen auftreten. Da die Quer-Druckfestigkeit von unidirektionalen Laminatschichten aber etwa dreimal so hoch ist, wie die Quer-Zugfestigkeit, soll der Behälter mit nach innen gewölbten Böden etwa dreimal höher belastbar sein, bevor Weeping auftritt. Bewusst wird dabei in Kauf genommen, dass die Fasern parallel zur Faserrichtung ungünstiger weise auf Druck belastet werden. Die Behälterherstellung erfolgt nicht mehr einteilig, sondern der zylindrische Behälterbereich wird beispielsweise als einteiliges Rohr auf einem Stahl-Wickelkern gefertigt und anschließend, nach dem Abziehen vom Kern, das Mittelteil auf Länge geschnitten. Zur Einbindung des Bodens ist an dem nach innen gewölbten Boden ein umlaufender Kragen angeordnet, der an der Innenwandung des Mittelteils anliegt und mit dieser verbunden ist. Hierbei kann der Boden eingeklebt, bei thermoplastischen Matrixsystemen auch eingeschweißt werden. Die Böden weisen verrippte Strukturen auf, wobei die Rippen durch unidirektionale Faserverbundstränge verstärkt sind. Die Leitungsanschlüsse sind in den Knotenpunkten der Verrippung angespritzt. Die verrippten Strukturen sind beidseitig am Bodens vorhanden und bestehen aus dem gleichen Material wie der Boden.

Ein gravierender Nachteil dieser Lösung ist der insgesamt schlechte Raumausnutzungsgrad, da ein Teil des von dem Behälter beanspruchten Bauraumes aufgrund der nach innen gewölbten Böden nicht als Speicher-Raum zur Verfügung steht.

Zur Gestaltung der Anschlüsse in der Polkappe sind ebenfalls bereits Lösungen bekannt Beispielsweise ist aus der Druckschrift DE 100 00 705 A1 ein Druckbehälter zur Speicherung von flüssigen und/oder gasförmigen Medien unter Druck bekannt. Der Druckbehälter besteht aus einem Kunststoffkernbehälter der mit faserverstärkten Kunststoffen verstärkt ist. Des Weiteren wird ein Verfahren zu dessen Herstellung beschrieben.

Der Anschlussbereich des faserkunststoffverbundverstärkten Kunststoff-Kernbehälters besitzt ein Anschlussstück im Hals- und/oder Boden und/oder zylindrischen Behälterteil. In das Anschlussstück des Kunststoff-Kernbehälters ist ein Insert eingebracht, welches den Ausgang des Anschlusszapfens des Kunststoff-Kernbehälters kragenförmig einhüllt. Das Insert ist mit einer ringförmigen Nut für einen Dichtring, unterhalb des auslaufenden Kragens des Inserts, zwischen Insert und Innenoberfläche des Anschlusszapfens des Kunststoff-Kernbehälters versehen. Zudem ist eine weitere ringförmige Nut mit einem Dichtring an der Oberfläche des auslaufenden Kragens des Inserts vorgesehen, der mit der Druckleitungszuführung verpresst wird. Somit werden zwei Dichtungen benötigt. Das Anschlussstück ist zur Oberfläche des Kunststoff-Kernbehälters kragenförmig geformt und an die Kontur der Behälteroberfläche angepasst. Es wird mittels Fügetechnik wie Klebung oder mittels Gewinde mit der Außenoberfläche des Anschlusszapfens des Behälters verbunden. Die Aufnahme der Druckleitung erfolgt über konische oder zylindrische Gewinde. Diese Befestigung muss in mehreren Stufen hergestellt und montiert werden.

In der Druckschrift WO2014/139531 A1 wird eine Polkappe für einen Druckbehälter zur Speicherung von Druckluft offenbart. Die Polkappe weist außen angeordnete Anschlüsse auf, die mittels einer Stützstruktur an einer, die Polkappe ummantelnden Polymerschale abgestützt sind.

Die Polkappe weist einen Verbindungspunkt für den rohrförmigen Abschnitt des Druckbehälters auf. Nach erfolgtem Einsetzen des rohrförmigen Abschnittes in die Aufnahmepunkte werden diese miteinander verschweißt.

Der Druckbehälter aus Druckschrift DE 10 2009 014 057 A1 verfügt über eine Wandung aus Faserverbundwerkstoff und einen Liner aus Kunststoff sowie einen Anschlussflansch. Zum einfachen Herstellen und Abdichten des Druckbehälters ist ein Abschnitt des Außenumfanges des Anschlussflanschs Konus förmig ausgebildet und wirkt mit einem entsprechend gestalteten Stützring an der Wandung des Behälters zusammen. Zwischen den Schultern des Anschlussflanschs und der Behälterwandung befindet sich ein aus Kunststofffolie, insbesondere Polyethylen oder Multilayer-Folie bestehender Liner.

Der Anschlussflansch wird mittels einer Mutter an der Behälterwandung verschraubt und von einem Stützring aus Metall oder Kunststoff in Position gehalten.

Bei beiden Varianten führt die Ausformung des Anschlusses am inneren Kernbehälter und Anbringung des Inserts vor dem Verstärken des Behälters dazu, dass beim Umwickeln der Anschluss als Störstelle in der Wicklung auftritt und den Faserverlauf negativ beeinflusst. Es entstehen Wickelschatten, die durch mehrfache Überwicklung in verschiedenen Winkeln minimiert werden müssen, um den Kernbehälter gegen den anliegenden Innendruck abzustützen. Dabei kommt es zu Fehlstellen in der Wicklung in Form von hohl liegenden Wicklungen. Diese treten an der Stelle auf, wo sich Wicklungen in verschiedenen Winkeln über den Wickelschatten der darunter befindlichen Lage legen.

Sogenannte Klöpperböden mit Verstärkungsrippen sind aus der Druckschrift DE 1 939 919 U (P9) bekannt. Die Rippen sind jeweils nur in eine Richtung weisend ausgeformt und radial und in Form konzentrischer Ringe ausgerichtet.

Zur Schaffung eines geeigneten Verstärkungsaufbaus weist ein Deckel eines Druckbehälters gemäß DE 20 2004 005 680 U1, der aus einem Thermoplastischen Kunststoff besteht, auf der Deckelinnen- bzw. Außenseite Rippen auf.

Bei den beiden vorgenannten Böden sind die Rippen aus dem gleichem Material wie der Boden geformt.

Die Ausgestaltung insbesondere der dort beschriebenen Außen-Rippen ist jedoch relativ aufwendig und bringt nicht die gewünschte Steifigkeitserhöhung, die der Deformation des Bodens bei hohem Druck entgegenwirkt. Zudem ist die hier beschriebene Form der Polkappe im Hinblick auf die Bauraumausnutzung gegenüber einem Klöpperboden beispielsweise deutlich nachteilig.

Es sind ebenfalls Verbundstrukturen bekannt, die aus einem umgeformten Bauteil und anschließend durch Spritzguss hergestellten Versteifungen hergestellt werden.

So ist aus DE 10 2009 014 194 A1 ein Fahrwerksteil in Hybridstruktur bekannt, bei welchem ein metallischer Grundkörper (Tiefziehblech) durch eine Verstärkungsstruktur aus einem Kunststoff verstärkt ist.

Die Verstärkungsstruktur weist eine Mehrzahl an Rippen auf. Durch diese Ausgestaltungsform der Verstärkungsstruktur soll das ohnehin geringe Gewicht der Verstärkungsstruktur weiter geringgehalten werden, da es sich nicht um eine massive Verstärkungsstruktur handelt. Mittels der Rippenstruktur sollen gezielt Steifigkeits- und Festigkeitseigenschaften des Fahrwerksteils gesteuert werden können.

Aufgrund des Materialunterschiedes zwischen dem Tiefziehblech und der eingespritzten Verstärkungsstrukturen kommt es hier jedoch zu keiner stoffschlüssigen Verbindung, was die Festigkeit des Bauteiles negativ beeinflusst. Negativ wirkt sich auch der unterschiedliche Wärmeausdehnungskoeffizient von Tiefziehteil und angespritzten Verstärkungsstrukturen aus, der unter Umständen zur Ablösung der Verstärkungsstrukturen und damit zum Versagen des Bauteiles führen kann.

Es sind zudem sogenannte Organobleche bekannt. Dies sind Faserverbundwerkstoffe, die gegenwärtig vor allem im Automobil- und Flugzeugbau eingesetzt werden. Organobleche sind Faser-Matrix-Halbzeuge. Sie bestehen aus einem Fasergewebe oder einem Fasergelege, die in eine thermoplastische Kunststoffmatrix eingebettet sind. Die Vorteile einer thermoplastischen Matrix liegen in der Warmumformfähigkeit der Halbzeuge und den daraus resultierenden kürzeren Prozesszeiten im Vergleich zu konventionellen duroplastischen Faserverbundwerkstoff. Dies ist besonders in der Automobilindustrie mit ihren kurzen Prozesszeiten von hohem Interesse. Häufig verwendete Faserwerkstoffe sind Glas, Aramid und Kohlenstoff (Carbon). Bei Geweben und Gelegen können die Fasern auch rechtwinklig zueinander verlaufen, so dass die mechanischen Eigenschaften von Organoblech wie Steifigkeit, Festigkeit und Wärmeausdehnung besser als bei ihren metallischen Vorbildern definiert werden können. Im Gegensatz zu Metallblechen ist das Zug- und Druckverhalten, sowie andere mechanische und thermische Eigenschaften nicht isotrop.

Die Methode der Formgebung für die Organobleche wurde aus der Metallblechverarbeitung abgeleitet und für den Kompositwerkstoff weiterentwickelt.

Anstelle der rein metallischen Bleche, die in DE 10 2009 014 194 A1 den Grundkörper bilden, kann auch Organoblech (thermoplastische Prepregs) verwendet werden, das durch den angespritzten Kunststoff ausgesteift wird. Das Organoblech weist eine an sich schon hohe Steifigkeit auf und ist bei der Bildung eines Hybridbauteils dahingehend vorteilhaft, dass es sich mit dem angespritzten Kunststoff aufgrund der Materialgleichheit oder zumindest -ähnlichkeit stoffschlüssig verbinden kann, wodurch ein besonders guter Halt des angespritzten Kunststoffs am Trägerblech gegeben ist. Zudem ist der Wärmeausdehnungskoeffizient hier zumindest ähnlich, was eine Schwerwirkung zwischen den Komponenten bei Temperaturwechseln verringert.

Die Druckschrift DE 10 2011 003 971 A1 beschreibt ein ähnliches Lenkerelement mit einem Grundkörper, der aus einem im Wesentlichen kastenförmig tiefgezogenen Profilträger aus einem endlosfaserverstärkten plattenförmigen Thermoplast-Halbzeug (Organoblech) gebildet wird, in dessen Innenraum ein Füllkörper aus einem spritzgegossenen Kunststoff angeordnet ist, wobei der Füllkörper ebenfalls die Innenoberflächen des Profilträgers miteinander verbindet.

Derartige Anwendungen für Druckbehälter und insbesondere Polkappen von Druckbehältern sind nicht bekannt.

Aufgabe der vorliegenden Erfindung ist es, eine Polkappe für einen Druckbehälter und ein Verfahren zur Herstellung der Polkappe sowie einen mit der Polkappe ausgestatteten Druckbehälter zu entwickeln, welche die aufgezeigten Nachteile nicht aufweist und kostengünstig herzustellen sind.

Diese Aufgabe wird mit den kennzeichnenden Merkmalen des ersten, zwölften und sechzehnten Patentanspruchs gelöst.

Vorteilhafte Ausgestaltungen ergeben sich aus den Unteransprüchen.

Die Polkappe, welche insbesondere für einen Druckbehälter zur Speicherung von unter Druck stehenden Fluiden Anwendung findet, ist erfindungsgemäß als eine Hybridstruktur aus einem Organoblech mit einer angespritzten Verstärkungsstruktur ausgebildet.

Dadurch wird eine Polkappe geschaffen, die insbesondere für einen Leichtbau-Behälter geeignet ist und die sowohl die Anforderungen hinsichtlich Formbeständigkeit unter Druck, als auch Einfachheit der Herstellung und vergleichbarer Baugröße zu bekannten nach außen gewölbten Behälterböden in Klöpper- oder Korbbogenboden-Form erfüllt.

Der Druckbehälter weist einen Außenmesser D auf und in einer besonders vorteilhaften Ausprägung weist das umgeformte Organoblech der Polkappe einen Kalottenbereich und einen sich randseitig anschließenden Krempenbereich auf, wobei der zum Innenraum des Behälters weisende Innenradius, d.h. der Innenradius an der Polkappeninnenseite, im Kalottenbereich bevorzugt zwischen 0,7 und 1,0 x D und der Innenradius im Krempenbereich zwischen 0,1 und 0,25 x D liegt.

Es ist jedoch auch möglich die erfindungsgemäße Polkappe mit einer anderen Geometrie des Organobleches auszubilden und dabei das Organoblech zumindest bereichsweise mit einer sphärisch gekrümmten Form zu versehen. Diese Form kann im Wesentlichen halbkugelförmig (mit oder ohne Abflachung), aber auch nicht ausschließlich als Halbkugel ausgeführt sein oder auch als torisphärische oder elliptische Geometrie ausgebildet werden.

"Organobleche sind Faser-Matrix-Halbzeuge. Sie bestehen aus einem Fasergewebe oder einem Fasergelege und/ODER KOMBINATIONEN DAVON, die in eine thermoplastische Kunststoffmatrix eingebettet sind."

Das Organoblech ist somit ein thermoplastisches Halbzeug mit Faserverstärkung, bevorzugt Endlosfasern, (zum Beispiel, aber nicht ausschließlich aus Glas, Kohle, Aramid oder Basalt) eingebettet in einer thermoplastischen Kunststoffmatrix (zum Beispiel, aber nicht ausschließlich aus PP, PE, PA, PET; PS, PEEK).

Die Verstärkungsfasern des Organobleches bestehen insbesondere aus organischen oder anorganischen Fasern und können als Gewebe oder Gelege bzw. Mischformen der Beiden vorliegen (zum Beispiel, aber nicht ausschließlich Glas, Aramid, Kohle, Basalt oder Hybrid aus den bereits genannten) oder auch als Hybridgewebe (Faser + Matrix in Faserform)
Der Mehrschichtverbund des Organobleches besteht bevorzugt aus einem Mehrschicht-Verbund von gestapelten Einzellagen von Gewebe oder Gelege bzw. Mischformen der Beiden.

Als Grundform des Organobleches sind sowohl unidirektionale Halbzeuge, bestehend aus Einzellagen, gestapelt zu einem Mehrschichtverbund, als auch Gewebe-Halbzeug in Leinwand-, Köper- oder Atlasbindung bzw. Abwandlungen davon aus Einzellagen, gestapelt zu einem Mehrschichtverbund, möglich.

Die Verstärkungsstruktur des Organobleches ist rippenförmig ausgebildet. Dabei weist die Polkappe einen mit der Verstärkungsstruktur angespritzten und die Rippen abstützenden Außenring auf, wobei sich die Rippen radial zwischen dem Außenring und dem Organoblech und auf beiden Seiten des Organobleches (Innenseite und Außenseite) erstrecken.

Der Außenring stützt das Organoblech umfangsseitig in seinem Randbereich ab und die angespritzte äußere Verstärkungssturktur stützt das Organoblech im Krempenbereich auf der Außenseite/Oberseite ab.

Zur Befüllung des mit mindestens einer erfindungsgemäßen Polkappe hergestellten Behälters können bevorzugt im Kalottenbereich der Polkappe ein oder mehrere integrierte Anschlüsse vorgesehen sein, die in die Verstärkungsstruktur und/oder das Organoblech integriert sind oder sich daran anschließen.

Beispielsweise können die Anschlüsse durch Inserts gebildet werden, die beim Umspritzungsvorgang des Organobleches formschlüssig in die Verstärkungsstruktur eingebettet sind. Die Inserts sind in einer Reihe oder auf einem Teilkreis angeordnet.

Die Polkappe weist einen Fügebereich zum Verbinden mit einer weiteren Polkappe oder mit einem anderen Behälterelement, z.B. einem Behältermantel auf, wobei der Fügebereich bevorzugt als im Wesentlichen zylindrischer Bereich ausgebildet ist.

Verfahrensgemäß erfolgt die Herstellung der erfindungsgemäßen Polkappe dadurch, dass in einem ersten Schritt eine Platine aus Organoblech erwärmt wird, in einem zweiten Schritt das in einem kombinierten Umform-Spritzguss-Werkzeug befindliche erwärmte Organoblech durch die Schließbewegung des kombinierten Umform-Spritzguss-Werkzeuges umgeformt wird und in einem dritten Schritt das Organoblech mit einer Kunststoffmasse in dem Umform-Spritzguss-Werkzeuges umspritzt wird, wobei eine rippenartige, die mechanische Stabilität der Polkappe gegen die im Betrieb auftretenden Belastungen erhöhende Verstärkungsstruktur an dem Organoblech ausgebildet wird.

Die Platine aus Organoblech wird dabei vorher als flache 2D-Form aus einem plattenartigen Organoblech - Halbzeug durch ein beliebiges trennendes Verfahren geschnitten.

Weiterhin können in das kombinierte Umform-/ Spritzguss-Werkzeug ein oder mehrere Einlegeteile zur Herstellung von einem oder mehreren Anschlüssen der Polkappe eingelegt werden und beim Umspritzen des Organobleches mit umspritzt werden. Weiterhin können neben Anschlusselementen auch Dichtungselemente eingelegt und mit umspritzt werden.

Weiterhin können beim Umspritzen des Organobleches durch im Umform-Spritzguss-Werkzeug vorhandene Werkzeugelemente Durchgangsöffnungen in dem Injizierten Kunststoff ausgebildet werden, die zu Durchgangsöffnungen der Anschlusselemente führen.

Des Weiteren kann die Polkappe ohne Einlegeteile (Inserts) hergestellt werden. Die so hergestellte Polkappe weist einen 0-Loch-Boden auf und findet ohne Einlegeteile Anwendung.

Das für die Umformung der Organoblech Platine erforderliche Erwärmen erfolgt bevorzugt mittels Konvektions-, Strahlungs- oder Kontakterwärmung, wobei die Erwärmung außerhalb oder innerhalb des kombinierten Umform-/Spritzguss-Werkzeug erfolgen kann.

Durch die Schließbewegung der Werkzeughälften wird die Organoblech-Platine umgeformt und danach erfolgt das Einspritzen der Kunststoffmasse zur Ausformung der Stützstrukturen und formschlüssigen Einbettung ggf. vorhandener Anschlusselemente.

Als Spritzguss-Material wird dabei ein Thermoplast (zum Beispiel, aber nicht ausschließlich aus PP, PE, PA, PET; PS, PEEK) ohne oder mit Verstärkungs-Fasern (zum Beispiel, aber nicht ausschließlich aus Glas, Kohle, Aramid oder Basalt) verwendet. Die Verstärkungs-Fasern sind dabei Kurz- und/oder Langfasern.

Die im Zuge des Spritzguss-Vorganges angeformten Verstärkungsstukturen können dabei sowohl auf der Innen-, als auch auf der Außenseite rippenförmig angeordnet sein. Die ggf. vorhandenen Verstärkungsstrukturen auf der Außenseite stützen hierbei den Krempenbereich des umgeformten Organobleches, da hier die größten Spannungsspitzen entstehen.

Diese äußeren Verstärkungsrippen stützen sich an einem an die Polkappe im Zuge des Umspritzens mit angeformten Außenring ab.

Vorteilhafterweise wird der Anguss für den Umspritzungs-Prozess beispielsweise als Linien-Anguss im Bereich des Außenringes angeordnet, um die Formfüllung insbesondere der Verstärkungsstukturen auf der Innen- und Außenseite zu gewährleisten. Zudem ist diese Angussart weitgehend unabhängig von der Art, Position und Anzahl von Anschlüssen im Kalottenteil der Polkappe.

Der angespritzte Außenring ist so ausgebildet, dass er den Rand des umgeformten Organobleches abstützt, um eine Deformation aufgrund des Innendruckes zu verhindern.

Aufgrund der sehr hohen Festigkeiten, die Organobleche im Vergleich zu reinen Spritzguss-Konstruktionen bieten, kann die Kontur der erfindungsgemäßen Polkappe auch bei geringer Wandstärke des Organobleches und damit niedrigem Gewicht und niedrigen Kosten sehr flach ausfallen und in Ihrer Ausprägung des Kalotten- und Krempenradius' ähnlich den für Standard-Behälter aus Stahl verwendeten Klöpper- und Korbbogen-Boden - Geometrien gestaltet werden.

Damit ist der Bau von Druckbehälter möglich, die gegenüber vergleichbaren Stahl- oder Aluminium-Behältern fast keinen Mehrbedarf an Bauraum benötigen und daher eine nur geringfügig größere Behälterlänge aufweisen, dabei jedoch ein wesentlich geringeres Gewicht besitzen als entsprechende Stahlbehälter.

Wie bereits vorgenannt beschrieben, ist in die Polkappe mindestens ein Anschluss zum Befüllen bzw. Entleeren des mit mindestens einer erfindungsgemäßen Polkappe hergestellten Druckbehälters integriert. Diese Anschlüsse sind zur Sicherstellung einer ausreichenden Gebrauchstauglichkeit vorteilhaft als Inserts gestaltet, welche vor dem Umspritzen des Organobleches in die Form eingelegt und im Zuge der Ausformung der Verstärkungsstukturen formschlüssig in das Spritzguss-Material eingebettet werden. Zur Anpassung an verschiedene mögliche Anwendungsfälle können die Inserts aus verschiedenen Materialien wie z.B. aber nicht ausschließlich metallischen Werkstoffen wie Stahl, nicht rostender Stahl, Messing oder Aluminium, aber auch aus nicht-metallischen Werkstoffen, wie z.B. Kunststoffen mit oder ohne Verstärkungsfasern bestehen. Zur Übertragung der notwendigen Drehmomente zwischen Insert und Spritzguss-Polkappe werden vorteilhafterweise einen Formschluss erzeugenden Geometrieelemente (z.B. aber nicht ausschließlich 5- oder 6-eck oder Mehrzahnprofil) oder andere Oberflächenstrukturen eingesetzt (z.B. aber nicht ausschließlich Rändelung oder Nuten). Die Inserts können im Hinblick auf verschiedene Einsatzfälle mit jeweils angepasster Innengeometrie und in den jeweils geforderten Dimensionen ausgebildet sein (z.B. aber nicht ausschließlich, metrische Standard- oder Feingewinde, Rohrgewinde oder Aufnahmen für Stecksysteme).

Bei Anordnung mehrerer Anschlüsse in einer Polkappe können die Anschlüsse beispielsweise in der Standard-Anordnung für Druckbehälter für Bremssysteme von Kraftfahrzeugen nach DIN 74281-1, positioniert sein um eine volle Austauschbarkeit gegenüber den derzeit verwendeten Standard-Behältern aus Stahl oder Aluminium zu gewährleisten.

Eine besonders vorteilhafte Ausgestaltung der Erfindung sieht eine Anordnung der Anschlüsse in einem Teilkreis vor.

Diese Anordnung verbessert die geometrische Formstabilität im Abkühlungsprozess gegenüber der Linien-Anordnung erheblich, da sie zur Behälterachse symmetrisch ist. Die erfindungsgemäße Polkappe besitzt in einer vorteilhaften Ausprägung im Fügebereich zu einer weiteren Polkappe oder einem anderen Behälterelement z.B. einem Mantelrohr einen sich in Richtung zur Längsachse erstreckenden Bereich, der entsprechend der Form des Behälterelements, mit dem er verbunden werden soll, zylindrisch, oval, in der Art eines Vielecks usw. ausgebildet sein kann. Vorteilhafter Weise weist der sich in Richtung zur Längsachse erstreckende Fügebereich die gleiche Größe und die gleiche Wandstärke auf, wie das sich anschließende Behälterelement, z.B. ein Mantelrohr.

Es ist vorteilhaft, wenn die Polkappe mit dem weiteren Behälterelement (z.B. eine weitere Polkappe oder ein Mantelrohr) verschweißt wird, beispielsweise durch Stumpfschweißen. Es besteht aber auch die Möglichkeit, dass die Polkappe und die mit dieser zu verbindende zweite Polkappe oder ein anderes Behälterelement lediglich zueinander positioniert und lagefixiert werden.

Anschließend wird die Polkappe mit der zweiten Polkappe oder eine Polkappe mit wenigstens einem weiteren Behälterelement durch zumindest bereichsweises Umwickeln mit wenigstens einem Tape verbunden.

Das verwendete Tape ist ein faserverstärktes thermoplastisches Halbzeug beliebiger Abmessung, das aus einem mehrlagigen Schichtverbund von Geweben oder Gelegen bzw. Mischformen der Beiden mit mindestens zwei Verstärkungsrichtungen besteht.

Das Tape wird dabei stoffschlüssig und/oder formschlüssig mit der ersten Polkappe und der zweiten Polkappe bzw. mit der ersten Polkappe und einem weiteren Behälterelement verbunden. Dabei können bei Verwendung von zwei Polkappen diese stirnseitig aneinander anliegen, aber auch oder voneinander beabstandet sein, wobei sich zwischen den beabstandeten Polkappen das wenigstens eine Tape erstreckt und auch innerhalb des Tapes ein Behältermantel zwischen den Polkappen angeordnet sein kann.

Wird zwischen den aufeinander zuweisenden Stirnseiten der Polkappen ein Behältermantel angeordnet werden die Außenringe der Polkappen und der Behältermantel an ihren aufeinander zuweisenden Bereichen die aufeinander zuweisenden Bereiche überlappend am Außenumfang mit einem Tape umwickelt, so dass das Tape stoffschlüssig und/oder formschlüssig mit dem Außenumfang der Außenringe und des Behältermantels verbunden ist.

Die Haupt-Vorteile dieser Lösung im Vergleich zu bekannten Polkappen-Konstruktionen sind der durch die flache Bauweise entstehende Bauraum-Gewinn bzw. annähernde Gleichheit des Bauraumes zu einem vergleichbaren Stahl- oder Aluminium-Druckbehälter, die Flexibilität der Anschlüsse und die durch die Nutzung von Organoblechen sehr hohe Festigkeit gegenüber den auftretenden Belastungen.

Ein weiterer Vorteil ist der mögliche einstufige Herstellungsprozess der Polkappe, der eine wirtschaftliche Produktion ermöglicht.

Die Verwendung eines Organobleches als druckstabile Lage ermöglicht zudem eine mit faserverstärkten Kunststoffmassen nicht ohne Weiteres erreichbare Minimierung der Kriechneigung.

Die Erfindung wird nachfolgend an einem Ausführungsbeispiel und zugehörigen Zeichnungen näher erläutert.

Es zeigen:
- Figur 1: einen Längsschnitt durch eine Polkappe,
- Figur 2: eine Ansicht der Außenseite (Draufsicht) der Polkappe,
- Figur 3: eine Ansicht der in Richtung zum Innenraum des Behälters gerichteten Unterseite der Polkappe,
- Figur 4: eine Schnittdarstellung einer Polkappe mit sich anschließenden Behältermantel und Umwicklung,
- Figur 5: die Einzelheit X gemäß Figur 4,
- Figur 6: eine Einzelheit X in einer anderen Ausführungsvariante,
- Figur 7: ein kombiniertes Umform-/Spritzguss-Werkzeug vor dem Umformprozess mit eingelegter Platine aus Organoblech,
- Figur 8: ein kombiniertes Umform-/Spritzguss-Werkzeug nach dem Umformprozess des Organobleches,
- Figur 9: zwei stirnseitig zu einem Druckbehälter verbundene Polkappen,
- Figur 10: zwei voneinander beabstandete Polkappen, die durch den Liner miteinander verbunden sind,
- Figur 11: eine Variante der Verbindung der Polkappen mit einem zylindrischen dazwischen angeordneten Mantelbereich.

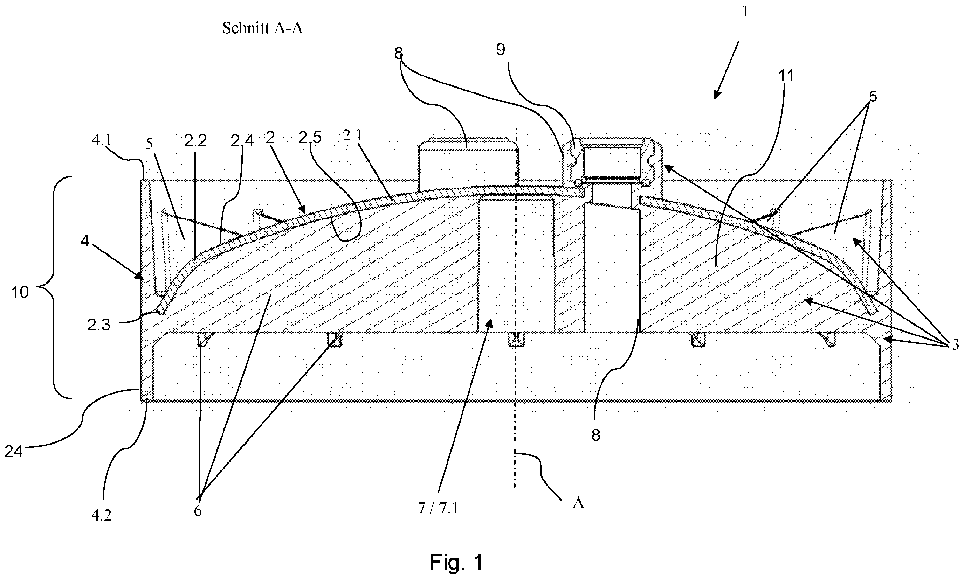

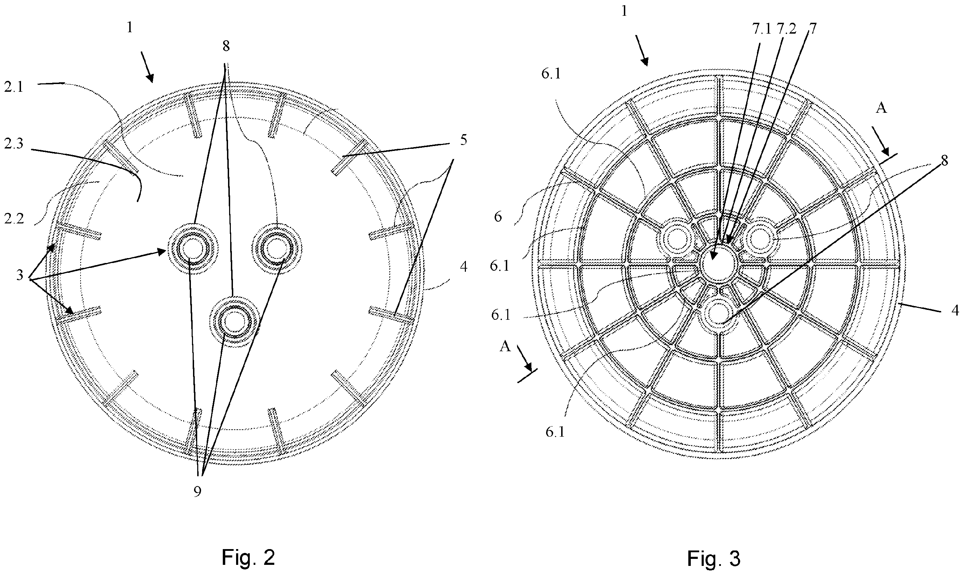

Figur 1 zeigt einen Schnitt A-A gemäß Figur 3 durch eine erfindungsgemäße Polkappe 1, Figur 2 die Draufsicht und Figur 3 die Unteransicht der Polkappe 1, welche in Hybridstruktur im Wesentlichen aus einem dreidimensional gewölbten Organoblech 2 und einer Kunststoffanspritzung 3 gebildet wird.

Das Organoblech 2 weist wie bei einem gewölbten Boden üblich, eine mittlere Kalotte 2.1, und eine sich radial außen anschließende Krempe 2.2 auf. An die Krempe 2.2 schließt sich hier jedoch kein zylindrischer Teil (Bord) an.

Die Kunststoffanspritzung 3 stellt einen Verstärkungsbereich des Organobleches 2 zur Verfügung und bildet einen an den Randbereich 2.3 des Organobleches 2 umfangsseitig angespritzten Außenring 4, der sich im Wesentlichen entlang der Längsachse A der Polkappe 1 erstreckt und hier in etwa zylinderförmig ausgebildet ist. An den Außenring 4 schließen sich Außenrippen 5 an, die sich vom nicht bezeichneten Innendurchmesser des Außenrings 4 radial nach innen bis zur Oberseite 2.4 des Organobleches 2 erstrecken aber nicht bis zu der nach außen weisenden ersten Stirnseite 4.1 des Außenrings 4 reichen. Weiterhin schließen sich an den Außenring 4 Innenrippen 6 an, die sich vom Innendurchmesser des Außenrings 4 radial nach innen bis zu einer zentrischen Ausformung 7 in der Art eines Knotenpunktes, in dem alle Innenrippen 6 zusammenlaufen, erstrecken. Die Ausformung 7 weist eine Ausnehmung 7.1 und eine aus Figur 3 ersichtliche umlaufende Wand 7.2 auf. Die Innenrippen 6 erstrecken sich in axialer Richtung nicht bis zu der nach innen weisenden zweiten Stirnseite 4.2 des Außenrings 4. Aus Figur 3 ist ersichtlich, dass sich zwischen den sich von Außen nach Innen erstreckenden Innenrippen 6 in Umfangsrichtung Zwischenrippen 6.1 auf hier drei unterschiedlichen Durchmessern erstrecken.

Die Polkappe 1 weist Anschlüsse 8 auf, die in die Kunststoffanspritzung 3 integriert sind und die auf einem gemeinsamen Teilkreis im Bereich der Kalotte 2.1 liegen. Die Anordnung im Teilkreis bietet den Vorteil, dass die Polkappe 2 insbesondere im Hinblick auf die Schrumpfung nach dem Spritzguss einfacher herzustellen ist, da die Punktsymmetrie zum Mittelpunkt gleichmäßigere Schrumpfungsvorgänge erlaubt, als die Reihen-Anordnung, die jedoch ebenfalls möglich ist.

Zur Sicherstellung der Gebrauchstauglichkeit und für die Möglichkeit der Kundenanpassung der Anschlüsse wird hier in jeden Anschluss 8 ein Insert 9 integriert, welches beim Hinterspritzen des Organobleches 2 formschlüssig durch die Spritzmasse (Kunststoffanspritzung 3) ummantelt wurde.

Der ebenfalls mit angespritzte Außenring 4 dient der Abstützung der Außenrippen 5 um einer Deformation des Organobleches 2 bei hohen Behälterdrücken entgegen zu wirken. Ein Anguss 10 für die Umspritzung des Organobleches 2 wird bevorzugt an der Außenseite der Polkappe 1 im Bereich des Außenringes 4 vorgesehen (s. Fig. 1).

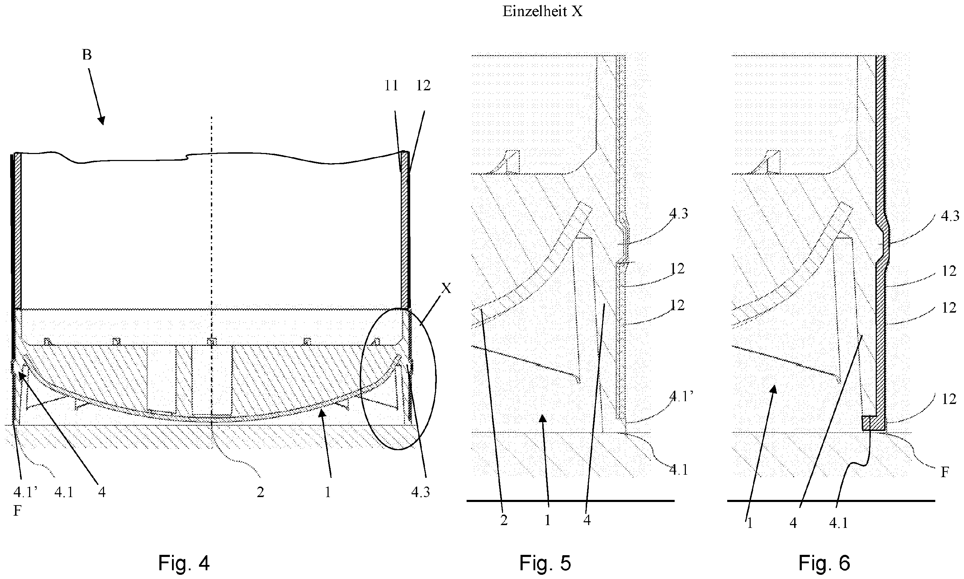

Figur 4 zeigt eine Teilschnittdarstellung eines Behälters B einer Polkappe 1 mit sich anschließenden Mantelbereich 11 und Umwicklung mit einem Tape 12 und Figur 5 die Einzelheit X gemäß Figur 4. Die Umwicklung mit dem Tape erstreckt sich über den nicht bezeichneten Außendurchmesser des Mantelbereiches und den nicht bezeichneten Außendurchmesser des Außenrings 4. An die erste Stirnseite 4.1 des Außenrings 4 schließt sich ein radial nach außen weisender Bund 4.1' an, bis zum dem das Tape 12 gewickelt ist.

Vor dem Umwickeln mit dem Tape 12 wurden die aufeinander zuweisenden aneinander anliegenden Stirnseiten des Außenrings 4 und des Mantelbereichs 11 ggf. miteinander verschweißt.

Der Außenring 4 weist radial nach außen gerichtete Erhebungen 4.3 auf, um die sich das Tape 12 stoffschlüssig mit dem Außenring 4 der Polkappe 2 und dem Außendurchmesser des Mantelbereichs 11 verbunden.

Der Mantelbereich 11 kann an dem nicht dargestellten gegenüberliegenden Ende ebenfalls mit einer erfindungsgemäßen Polkappe versehen sein.

Dadurch, dass der Außenring 4 bis über die Kalotte 2.1 des Organobleches 2 hinausreicht, ist es möglich, den damit hergestellten Behälter B senkrecht auf die erste Stirnseite 4.1 zu stellen, die somit eine Standfläche F bildet.

Eine Einzelheit X in einer anderen Ausführungsvariante ist in Figur 6 angedeutet.

Dabei reicht das Tape 12 bis über die erste Stirnseite 4.1 des Außenrings 2 und ist radial nach innen abgewinkelt, so dass das Tape 12 die Standfläche F bildet. Durch diese Ausführung wird gleichzeitig ein Formschluss zwischen Tape 12 und Polkappe 1 hergestellt.

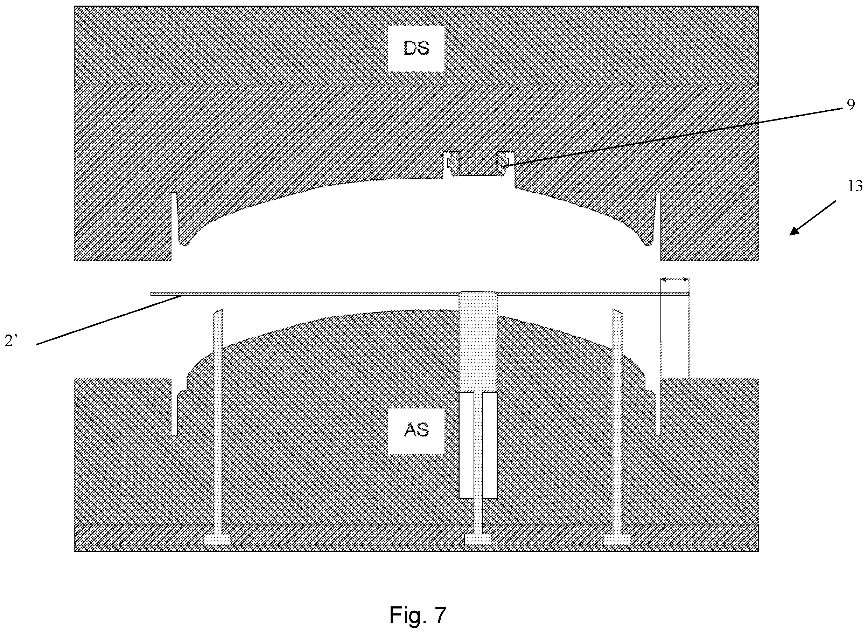

Figur 7 zeigt die ersten beiden Schritte des Herstellungsverfahrens. Im ersten Schritt wird die erwärmte Organoblech-Platine 2' in das Werkzeug eingelegt und dort positioniert aufgenommen. Es wurde ein Insert 9 (oder mehrere Inserts 9) im Werkzeug 13 positioniert.

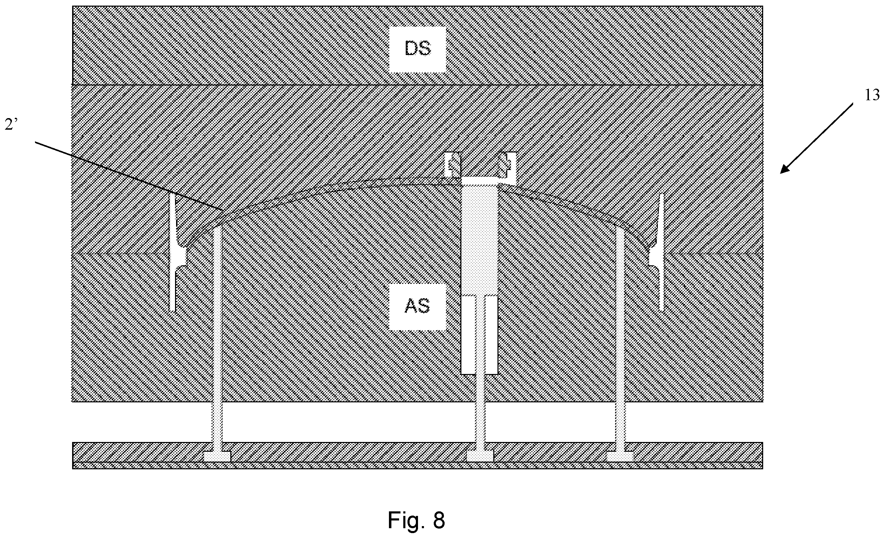

Im zweiten Schritt wird gemäß Figur 8 die Organoblech-Platine 2' in der Schließbewegung des Werkzeuges 13 umgeformt und erhält ihre spätere Form. Anschließend wird in einem dritten Schritt das Spritzgut in die Kavität 13.1 eingespritzt und verbindet sich mit dem umgeformten Organoblech zu einer Polkappe mit angespritzten Verstärkungsstrukturen (nicht dargestellt), wobei auch der Einsatz 9 umspritzt und dadurch in die Polkappe integriert wird.

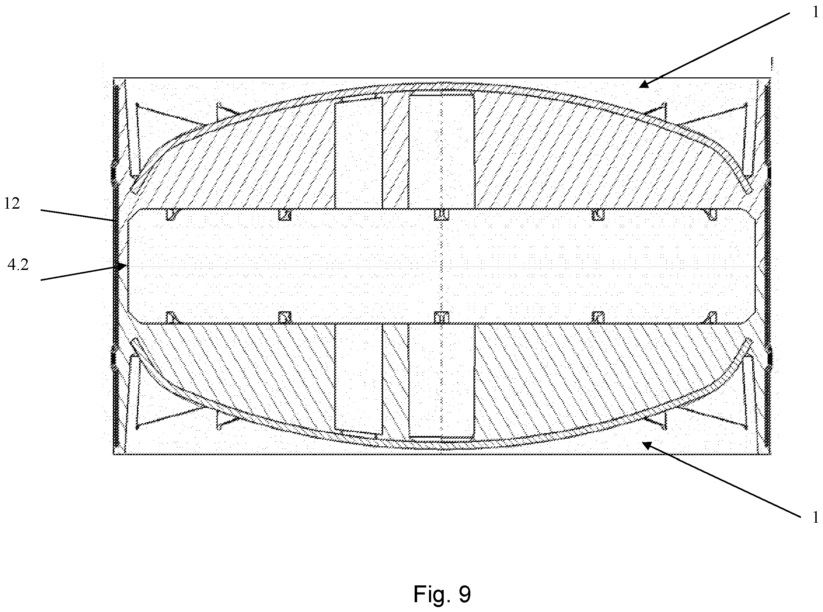

Nach Figur 9 liegen zwei Polkappen 1 an ihren aufeinander zuweisenden zweiten Stirnseiten 4.2 aneinander an und wurden im Bereich der zweiten Stirnseiten 4.2 miteinander verbunden, z.B. verschweißt, und am Außenumfang ihrer Außenringe 4 mit einem Tape 12 einfach oder mehrmals umwickelt.

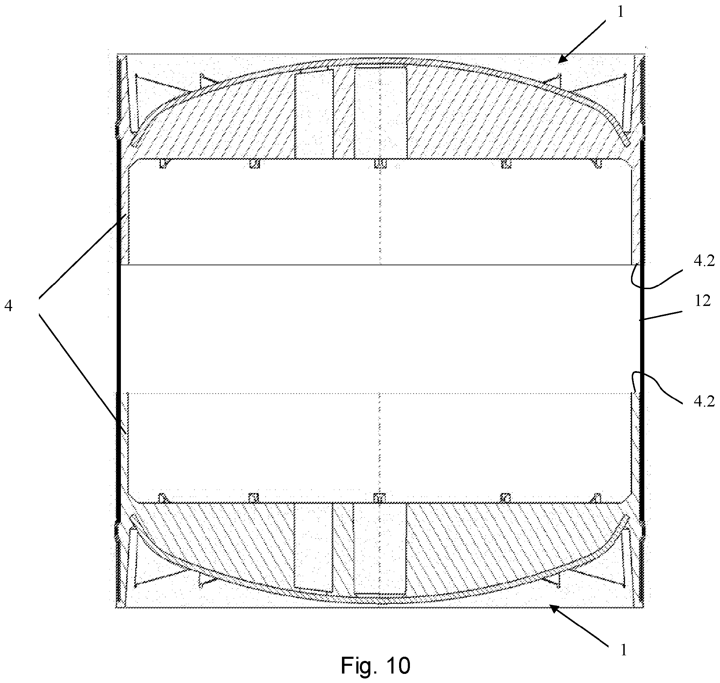

Gemäß Figur 10 wurden zwei voneinander beabstandete Polkappen 4, deren aufeinander zuweisende Stirnseiten 4.2 voneinander beabstandet sind, an ihren Außenringen 4 durch den Liner 12 umwickelt und dadurch miteinander verbunden.

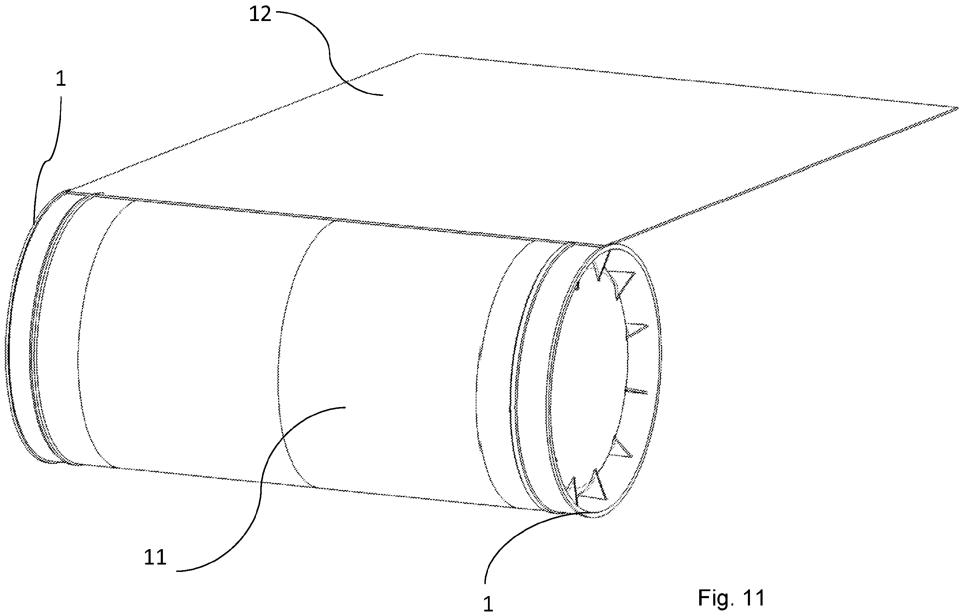

Figur 11 zeigt eine Variante der Verbindung zweier endseitigen Polkappen 1 mit einem zylindrischen dazwischen angeordneten Mantelbereich 11 mittels eines Tapes, welches sich im Wesentlichen über die Gesamtlänge aus den beiden Polkappen und dem Mantelbereich 11 erstreckt.

### Bezugszeichenliste

- 1: Polkappe
- 2: Organoblech
- 2': Organoblech Platine
- 2.1: Kalotte
- 2.2: Krempe
- 2.3: Randbereich
- 2.4: Oberseite
- 2.5: Unterseite
- 3: Kunststoffanspritzung
- 4: Außenring
- 4.1: Erste Stirnseite des Außenrings
- 4.1': Bund
- 4.2: Zweite Stirnseite des Außenrings
- 4.3: Erhebungen
- 5: Außenrippen
- 6: Innenrippen
- 6.1: Zwischenrippen
- 7: Ausformung
- 7.1: Ausnehmung
- 7.2: Wand
- 8: Anschluss
- 9: Insert
- 10: Anguss
- 11: Mantelbereich / Behältermantel
- 12: Tape
- 13: Werkzeug

- A: Längsachse
- B: Behälter

## Patentansprüche

1. Polkappe, insbesondere für einen Druckbehälter zur Speicherung von unter Druck stehenden Fluiden, wobei die Polkappe Rippen aufweist, wobei die Polkappe (1) als Hybridstruktur aus einem Organoblech (2) mit einer angespritzten Verstärkungsstruktur ausgebildet ist, wobei die Verstärkungsstruktur des Organobleches (2) aus thermoplastischem Kunststoff besteht, **dadurch gekennzeichnet dass** die Verstärkungsstruktur in Form von Rippen ausgebildet ist und dass die Polkappe (1) einen mit der Verstärkungsstruktur angespritzten und die Rippen abstützenden Außenring (4) aufweist und dass sich die Rippen radial zwischen dem Außenring (4) und dem Organoblech (2) und auf beiden Seiten des Organobleches (2) erstrecken und wobei
- der an den Randbereich (2.3) des Organobleches (2) umfangsseitig angespritzte Außenring (4) sich im Wesentlichen entlang der Längsachse (A) der Polkappe (1) erstreckt und in etwa zylinderförmig ausgebildet ist.

2. Polkappe nach Anspruch 1, **dadurch gekennzeichnet, dass** sich an den Außenring (4) Außenrippen (5) anschließen, die sich vom Innendurchmesser des Außenrings (4) radial nach innen bis zur Oberseite (2.4) des Organobleches (2) erstrecken.

3. Polkappe nach Anspruch 1, **dadurch gekennzeichnet, dass** sich an den Außenring (4) Innenrippen (6) anschließen, die sich vom Innendurchmesser des Außenrings (4) radial nach innen bis zu einer zentrischen Ausformung (7) in der Art eines Knotenpunktes, in dem alle Innenrippen (6) zusammenlaufen, erstrecken, aber nicht bis zu der nach aussen weisenden ersten Stirnseite (4.1) des Aussenrings (4) reichen.

4. Polkappe nach einem der Ansprüche 1 bis 3, **dadurch gekennzeichnet, dass** das Organoblech (2) der Polkappe (1) zumindest bereichsweise sphärisch geformt ist.

5. Polkappe nach einem der Ansprüche 1 bis 4, **dadurch gekennzeichnet, dass** das Organoblech (2) ein thermoplastisches Halbzeug mit Faserverstärkung, eingebettet in einer thermoplastischen Kunststoffmatrix, ist und dass die Verstärkungsfasern des Organobleches (2) aus organischen oder anorganischen Fasern bestehen.

6. Polkappe nach Anspruch 1 **dadurch gekennzeichnet, dass** die Verstärkungsfasern des Organobleches (2) als Gewebe oder Gelege oder Mischformen der Beiden oder auch als Hybridgewebe aus Fasern und Matrix in Faserform vorliegen und dass ein Mehrschichtverbund des Organobleches (2) aus einem Mehrschicht-Verbund von gestapelten Einzellagen von Gewebe oder Gelegen oder Mischformen der Beiden besteht.

7. Polkappe nach einem der Ansprüche 1 bis 6, **dadurch gekennzeichnet, dass** der Außenring (4) das Organoblech (2) umfangsseitig in seinem Randbereich abstützt und dass die angespritzte äußere Verstärkungssturktur das Organoblech (2) im Bereich einer Krempe (2.1) auf der Außenseite/Oberseite abstützt.

8. Polkappe nach einem der Ansprüche 1 bis 7, **dadurch gekennzeichnet, dass** diese einen oder mehrere integrierte Anschlüsse (8) aufweist, die in die Verstärkungsstruktur und/oder das Organoblech (2) integriert sind oder sich daran anschließen.

9. Polkappe nach Anspruch 8, **dadurch gekennzeichnet, dass** die Anschlüsse (8) in Form von Inserts (9) formschlüssig in der Verstärkungsstruktur angeordnet sind.

10. Polkappe nach Anspruch 9, **dadurch gekennzeichnet, dass** die Inserts (9) in einer Reihe oder auf einem Teilkreis angeordnet sind.

11. Polkappe nach einem der Ansprüche 1 bis 10, **dadurch gekennzeichnet, dass** diese eine Längsachse A (aus Seite 14, Zeile 6) und einen Fügebereich zum Verbinden mit einer weiteren Polkappe (1) oder mit einem Behältermantel (11) aufweist, wobei der Fügebereich bevorzugt als axial sich erstreckender Bereich ausgebildet ist.

12. Verfahren zur Herstellung einer Polkappe nach Anspruch 1, **dadurch gekennzeichnet, dass**
- in einem ersten Schritt eine Platine (2') aus Organoblech (2) erwärmt wird
- in einem zweiten Schritt das in einem kombinierten Umform-Spritzguss-Werkzeug (13) befindliche erwärmte Organoblech (2) in der Schließbewegung des kombinierten Umform-Spritzguss-Werkzeuges (13) umgeformt wird und
- in einem dritten Schritt das Organoblech (2) mit einer Kunststoffmasse umspritzt wird, wobei eine die mechanische Stabilität der Polkappe (1) gegen die im Betrieb auftretenden Belastungen erhöhende Verstärkungsstruktur in Form von Rippen ausgebildet wird.

13. Verfahren nach Anspruch 12, **dadurch gekennzeichnet, dass** in das Umform-Spritzguss-Werkzeug (15) ein oder mehrere Einlegeteile zur Herstellung von einem oder mehreren Anschlüssen (8) der Polkappe (1) eingelegt werden und beim Umspritzen des Organobleches (2) mit umspritzt werden.

14. Verfahren nach Anspruch 12 oder 13, **dadurch gekennzeichnet, dass** beim Umspritzen des Organobleches (2) durch im Umform-Spritzguss-Werkzeug (13) vorhandene Werkzeugelemente Durchgangsöffnungen in dem Injizierten Kunststoff ausgebildet werden, die zu Durchgangsöffnungen der Anschlüsse (8) führen.

15. Druckbehälter aufweisend wenigstens eine Polkappe nach Anspruch 1, **dadurch gekennzeichnet, dass** eine erste Polkappe (1) mit einer zweiten Polkappe (1) durch zumindest bereichsweises Umwickeln mit wenigstens einem Tape (12) verbunden ist und dass die Polkappen (1) stirnseitig aneinander anliegen oder voneinander beabstandet sind.

16. Druckbehälter nach Anspruch 15, **dadurch gekennzeichnet, dass** die Polkappe (1) als Hybridstruktur aus einem Organoblech (2) mit einer angespritzten Verstärkungsstruktur ausgebildet ist, wobei die Verstärkungsstruktur des Organobleches (2) aus thermoplastischem Kunststoff besteht und in Form von Rippen ausgebildet ist und dass die Polkappe (1) einen mit der Verstärkungsstruktur angespritzten und die Rippen abstützenden Außenring (20) aufweist und dass sich die Rippen radial zwischen dem Außenring (20) und dem Organoblech (2) und auf beiden Seiten des Organobleches (2) erstrecken und dass zwischen den aufeinander zuweisenden Stirnseiten der Polkappen (1) ein Behältermantel (11) angeordnet ist und dass die Außenringe (4) der Polkappen (1) und der Behältermantel (11) an ihren aufeinander zuweisenden Bereichen die aufeinander zuweisenden Bereiche überlappend am Außenumfang mit einem Tape (12) umwickelt sind und dass das Tape (12) stoffschlüssig und/oder formschlüssig mit dem Außenumfang der Außenringe (4) und des Behältermantels (11) verbunden ist.

## Claims

1. End cap, in particular for a pressure vessel for storing pressurized fluids, wherein the end cap has ribs, wherein the end cap (1) is designed as a hybrid structure comprising an organo sheet (2) with an overmolded reinforcing structure, wherein the reinforcing structure of the organo sheet (2) consists of thermoplastic material, **characterized in that** the reinforcing structure is in the form of ribs and **in that** the end cap (1) has an outer ring (4) which is overmolded with the reinforcing structure and supports the ribs, and **in that** the ribs extend radially between the outer ring (4) and the organo sheet (2) and on both sides of the organo sheet (2), and wherein
- the outer ring (4), which is overmolded onto the peripheral region (2.3) of the organo sheet (2) on the circumferential side, extends substantially along the longitudinal axis (A) of the end cap (1) and is of approximately cylindrical design.

2. End cap according to claim 1, **characterized in that** outer ribs (5), which extend radially inwards from the inside diameter of the outer ring (4) to the upper side (2.4) of the organo sheet (2), adjoin the outer ring (4).

3. End cap according to claim 1, **characterized in that** the outer ring (4) is adjoined by inner ribs (6) which extend radially inwards from the inside diameter of the outer ring (4) as far as a centric formation (7) in the manner of a junction in which all the inner ribs (6) converge, but do not extend as far as the outwardly facing first end face (4.1) of the outer ring (4).

4. End cap according to one of claims 1 to 3, **characterized in that** the organo sheet (2) of the end cap (1) is spherically shaped at least in regions.

5. End cap according to one of claims 1 to 4, **characterized in that** the organo sheet (2) is a thermoplastic semi-finished product with fiber reinforcement, embedded in a thermoplastic plastic matrix, and **in that** the reinforcing fibers of the organo sheet (2) consist of organic or inorganic fibers.

6. End cap according to claim 1, **characterized in that** the reinforcing fibers of the organo sheet (2) are in the form of fabric or scrims or mixed forms thereof, or also as hybrid fabric of fibers and matrix in fiber form and **in that** a multilayer composite of the organo sheet (2) consists of a multilayer composite of stacked individual layers of fabric or scrims or mixed forms thereof.

7. End cap according to one of claims 1 to 6, **characterized in that** the outer ring (4) supports the organo sheet (2) on the circumferential side in its edge region and **in that** the overmolded outer reinforcing structure supports the organo sheet (2) in the region of a brim (2.1) on the outside/upper side.

8. End cap according to one of claims 1 to 7, **characterized in that** it comprises one or more integrated connections (8) which are integrated into or adjoin the reinforcing structure and/or the organo sheet (2).

9. End cap according to claim 8, **characterized in that** the connections (8) in the form of inserts (9) are arranged positively in the reinforcing structure.

10. End cap according to claim 9, **characterized in that** the inserts (9) are arranged in a row or on a pitch circle.

11. End cap according to one of claims 1 to 10, **characterized in that** it has a longitudinal axis A (from page 14, line 6) and a joining region for connecting to a further end cap (1) or to a container jacket (11), wherein the joining region is preferably designed as an axially extending region.

12. Method for the production of an end cap according to claim 1, **characterized in that**
- in a first step, a plate (2') of organo sheet (2) is heated,
- in a second step, the heated organo sheet (2) located in a combined forming and injection-molding tool (13) is formed in the closing movement of the combined forming and injection-molding tool (13), and
- in a third step the organo sheet (2) is encapsulated with a plastic compound, wherein a reinforcing structure in the form of ribs increasing the mechanical stability of the end cap (1) against the loads occurring during operation is formed.

13. Method according to claim 12, **characterized in that** one or more insert parts for producing one or more connections (8) of the end cap (1) are inserted into the forming injection-molding tool (15) and are also encapsulated during the encapsulation of the organo sheet (2).

14. Method according to claim 12 or 13, **characterized in that**, when the organo sheet (2) is encapsulated by molding elements present in the forming injection-molding tool (13), through-openings are formed in the injected plastic material which lead to through-openings of the connections (8).

15. Pressure vessel having at least one end cap according to claim 1, **characterized in that** a first end cap (1) is connected to a second end cap (1) by at least wrapping in sections with at least one tape (12), and **in that** the end caps (1) abut one another at the end faces or are spaced apart from one another.

16. Pressure vessel according to claim 15, **characterized in that** the end cap (1) is formed as a hybrid structure from an organo sheet (2) with an overmolded reinforcing structure, wherein the reinforcing structure of the organo sheet (2) is made of thermoplastic material and is in the form of ribs, and **in that** the end cap (1) has an outer ring (20) which is overmolded with the reinforcing structure and supports the ribs, and **in that** the ribs extend radially between the outer ring (20) and the organo sheet (2) and on both sides of the organo sheet (2), and **in that** a container jacket (11) is arranged between the mutually facing end faces of the pole caps (1), and **in that** the outer rings (4) of the end caps (1) and the container jacket (11) are wrapped with a tape (12) at their regions which face one another so as to overlap the regions which face one another on the outer circumference, and **in that** the tape (12) is connected to the outer circumference of the outer rings (4) and of the container jacket (11) in a material-locking and/or form-fitting manner.

## Revendications

1. Calotte sphérique, en particulier pour un réservoir sous pression pour le stockage de fluides sous pression, laquelle calotte sphérique présente des nervures, laquelle calotte sphérique (1) est conçue comme une structure hybride faite d'une tôle thermoplastique (2) avec une structure de renfort appliquée par pulvérisation, la structure de renfort de la tôle thermoplastique (2) étant faite de matière thermoplastique, **caractérisée en ce que** la structure de renfort est conformée comme des nervures et **en ce que** la calotte sphérique (1) présente un anneau extérieur (4) appliqué par pulvérisation avec la structure de renfort et supportant les nervures et **en ce que** les nervures s'étendent dans le sens radial entre l'anneau extérieur (4) et la tôle thermoplastique (2) et des deux côtés de la tôle thermoplastique (2),
- l'anneau extérieur (4) appliqué par pulvérisation sur la circonférence de la zone de bord (2.3) de la tôle thermoplastique (2) s'étendant pour l'essentiel le long de l'axe longitudinal (A) de la calotte sphérique (1) et ayant une forme à peu près cylindrique.

2. Calotte sphérique selon la revendication 1, **caractérisée en ce que** se raccordent à l'anneau extérieur (4) des nervures extérieures (5) qui s'étendent vers l'intérieur dans le sens radial du diamètre intérieur de l'anneau extérieur (4) jusqu'à la face supérieure (2.4) de la tôle thermoplastique (2).

3. Calotte sphérique selon la revendication 1, **caractérisée en ce que** se raccordent à l'anneau extérieur (4) des nervures intérieures (6) qui s'étendent vers l'intérieur dans le sens radial d'un diamètre intérieur de l'anneau extérieur (4) à une structure centrale (7) formant un point nodal vers lequel toutes les nervures intérieures (6) convergent, mais pas jusqu'à la première face frontale (4.1) de l'anneau extérieur (4) tournée vers l'extérieur.

4. Calotte sphérique selon l'une des revendications 1 à 3, **caractérisée en ce que** la tôle thermoplastique (2) de la calotte sphérique (1) a une forme sphérique au moins par zones.

5. Calotte sphérique selon l'une des revendications 1 à 4, **caractérisée en ce que** la tôle thermoplastique (2) est un semi-produit thermoplastique armé de fibres intégré dans une matrice en matière thermoplastique et **en ce que** les fibres de renfort de la tôle thermoplastique (2) sont faites de fibres organiques ou inorganiques.

6. Calotte sphérique selon la revendication 1 **caractérisée en ce que** les fibres de renfort de la tôle thermoplastique (2) se présentent comme un textile ou une nappe ou des formes mixtes des deux ou comme un textile hybride de fibres et d'une matrice fibreuse et **en ce qu'**un composite multicouche de la tôle thermoplastique (2) se compose d'un composite en plusieurs couches agrafées de textile ou de nappes ou de formes mixtes des deux.

7. Calotte sphérique selon l'une des revendications 1 à 6, **caractérisée en ce que** l'anneau extérieur (4) supporte la tôle thermoplastique (2) sur sa circonférence dans sa zone de bord et **en ce que** la structure de renfort extérieure appliquée par pulvérisation supporte la tôle thermoplastique (2) au niveau d'un rebord (2.1) sur la face extérieure/supérieure.

8. Calotte sphérique selon l'une des revendications 1 à 7, **caractérisée en ce qu'**elle présente un ou plusieurs raccords intégrés (8) qui sont intégrés dans la structure de renfort et/ou la tôle thermoplastique (2) ou s'y raccordent.

9. Calotte sphérique selon la revendication 8, **caractérisée en ce que** les raccords (8) sont disposés en correspondance de forme sous forme d'inserts (9) dans la structure de renfort.

10. Calotte sphérique selon la revendication 9, **caractérisée en ce que** les inserts (9) sont disposés sur une rangée ou un segment de cercle.

11. Calotte sphérique selon l'une des revendications 1 à 10, **caractérisée en ce qu'**elle présente un axe longitudinal A (page 14, ligne 6) et une zone de joint pour l'assemblage avec une autre calotte sphérique (1) ou avec une enveloppe de réservoir (11), la zone de joint étant de préférence conformée comme une zone qui s'étend dans le sens axial.

12. Procédé pour la fabrication d'une calotte sphérique selon la revendication 1, **caractérisé en ce que**
- dans une première étape, un flan (2') de tôle thermoplastique (2) est chauffé ;
- dans une deuxième étape, la tôle thermoplastique (2) chauffée placée dans un outil combiné de formage et de moulage par injection (13) est formée lors du mouvement de fermeture de l'outil combiné de formage et de moulage par injection (13) ;
- dans une troisième étape, la tôle thermoplastique (2) est enrobée par injection avec une masse de plastique en créant une structure de renfort formée de nervures qui renforce la stabilité mécanique de la calotte sphérique (1) contre les contraintes survenant en service.

13. Procédé selon la revendication 12, **caractérisé en ce qu'**une ou plusieurs pièces incluses sont déposées dans l'outil de formage et de moulage par injection (15) pour fabriquer un ou plusieurs raccords (8) de la calotte sphérique (1) et sont enrobées en même temps lors de l'enrobage de la tôle thermoplastique (2).

14. Procédé selon la revendication 12 ou 13, **caractérisé en ce que** lors de l'enrobage de la tôle thermoplastique (2), des éléments d'outil présents dans l'outil de formage et de moulage par injection (13) créent des ouvertures de passage dans le plastique injecté, qui mènent à des ouvertures de passage des raccords (8).

15. Réservoir sous pression présentant au moins une calotte sphérique selon la revendication 1, **caractérisé en ce qu'**une première calotte sphérique (1) est assemblée avec une deuxième calotte sphérique (1) par l'application au moins par zones d'au moins un ruban adhésif (12) et **en ce que** les calottes sphériques (1) reposent l'une sur l'autre ou sont écartées l'une de l'autre sur leur face frontale.

16. Réservoir sous pression selon la revendication 15, **caractérisé en ce que** la calotte sphérique (1) est conçue comme une structure hybride faite d'une tôle thermoplastique (2) avec une structure de renfort appliquée par pulvérisation, la structure de renfort de la tôle thermoplastique (2) étant faite de matière thermoplastique et conformée comme des nervures, et **en ce que** la calotte sphérique (1) présente un anneau extérieur (20) appliqué par pulvérisation avec la structure de renfort et supportant les nervures et **en ce que** les nervures s'étendent dans le sens radial entre l'anneau extérieur (20) et la tôle thermoplastique (2) et des deux côtés de la tôle thermoplastique (2), et **en ce qu'**une enveloppe de réservoir (11) est disposée entre les faces frontales tournées l'une vers l'autre des calottes sphériques (1) et **en ce que** les anneaux extérieurs (4) des calottes sphériques (1) et l'enveloppe de réservoir (11) sont entourés dans leurs zones tournées les unes vers les autres sur la circonférence extérieure par un ruban adhésif (12) en chevauchant et **en ce que** le ruban adhésif (12) est relié par adhérence et/ou en correspondance de forme à la circonférence extérieure des anneaux extérieurs (4) et de l'enveloppe de réservoir (11).
